# EUROPEAN PATENT SPECIFICATION

(11) **EP 3 966 292 B1**
(45) Date of publication and mention of the grant of the patent: **12.04.2023**
(21) Application number: 20720470.2
(22) Date of filing: 28.04.2020
(51) Int. Cl.: C09D 11/326, C09D 11/38, C09D 11/40, C09D 11/54

(54) **AQUEOUS INKJET INK COMPRISING A RESIN**
WÄSSRIGE TINTENSTRAHLTINTE MIT EINEM HARZ
ENCRE AQUEUSE POUR JET D'ENCRE COMPRENANT UNE RÉSINE

(30) Priority: 06.05.2019 EP 19172687
(43) Date of publication of application: 16.03.2022
(73) Proprietor: AGFA NV, 2640 Mortsel (BE)
(72) Inventor: LOCCUFIER, Johan, 2640 Mortsel (BE); DECOSTER, Luc, 2640 Mortsel (BE)
(74) Representative: Lingier, Stefaan Frans L.
(86) International application number: PCT/EP2020/061671
(87) International publication number: WO 2020/225014

(56) References cited:
- EP-A1- 1 790 695
- EP-A1- 1 790 698
- EP-A1- 2 865 531

## Description

### Technical Field

The present invention relates to an aqueous resin based ink jet ink comprising pigments as colorants with increased stability and jetting reliability.

### Background Art

Ink jet is evolving towards the preferred technology for digital printing in a more industrial environment. Traditionally UV curable inks have been the preferred choice for different applications. However, in some applications such as textile printing, packaging printing on card board and some decoration applications, the use of UV curable technology is limited by consideration on toxicology and skin irritation. Therefore, there is an evolution towards aqueous inks and particularly towards resin based aqueous inks, where the resin is needed for physical properties of the printed image.

Although different resin types can be integrated into an ink design, poly(urethane) resin dispersions and encapsulation based resin technologies are of particular interest due to their performance in the end application.

In an industrial environment, jetting reliability and stability of the ink is of major importance to avoid down time of the printers and loss of production efficiency, resulting in significant economically loss.

The design of aqueous resin based inks is particularly challenging from a colloid stability point of view. Especially, pigments, such as quinacridones and diketopyrrolopyrrolo (DPP)-pigments, having both hydrogen bonding donors and hydrogen bonding acceptors on their crystal planes are very difficult to combine with resins having also both hydrogen bond donors and hydrogen bond acceptors on the surface, such as poly(urethane) and poly(urea) based resins. Being able to combine these pigment and resin classes in an ink jet ink is of particular industrial relevance due to e.g. the combination of excellent light fastness with excellent physical properties in the printed image.

Therefore, there is a need for conceptual approaches allowing the design of highly stable quinacridone or DPP poly(urethane) or poly(urea) containing aqueous resin based ink jet inks.

### Summary of invention

It is an objective of the invention to provide an aqueous resin based ink jet ink comprising a pigment as a colorant with excellent stability. This objective is realised by means of the ink composition as defined in claim 1.

It is a further object of the present invention to provide a magenta, red or orange pigmented aqueous resin based ink with excellent stability as defined in claims 2 and 3.

It is another object of the present invention to provide an ink set comprising at least one aqueous resin based ink according to the present invention. These and other objects of the present invention will become apparent from the detailed description hereinafter.

### Description of embodiments

### A. Aqueous ink jet ink

The objective of the present invention is realized by an aqueous ink jet ink comprising a resin particle selected from the group consisting of a poly(urea), a poly(urethane) and combinations thereof, a pigment selected from the group consisting of quinacridones and diketopyrrolopyrrole pigments and a compound represented by general formula I or general formula II.
A.1. Compound represented by general formula I or general formula II 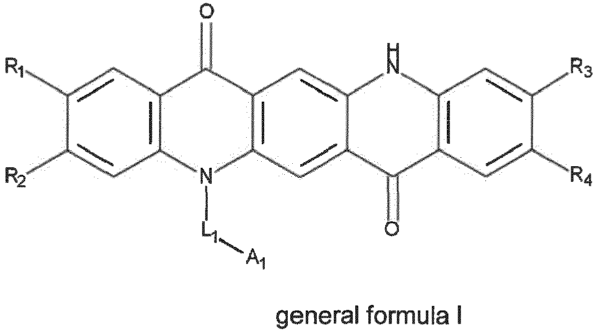 wherein
R₁, R₂, R₃ and R₄ are independently selected from the group consisting of a hydrogen, a substituted or unsubstituted alkyl group, a substituted or unsubstituted aryl group, a halogen and an alkoxy group L₁ represents a divalent linking group comprising no more than 20 carbon atoms
A₁ represents a functional group selected from the group consisting of a carboxylic acid or salt thereof, a sulfonic acid or salt thereof, a phosphonic acid or salt thereof, a mono ester of phosphoric acid or salt thereof and a mono ester of sulfuric acid or salt thereof 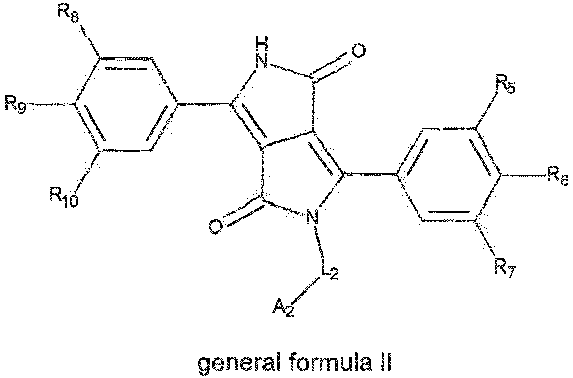 wherein
R₅, R₆, R₇, R₈, R₉ and R₁₀ are independently selected from the group consisting of a hydrogen, a substituted or unsubstituted alkyl group, a substituted or unsubstituted aryl group, a halogen, a nitrile group and an alkoxy group
L₂ represents a divalent linking group comprising no more than 20 carbon atoms
A₂ represents a functional group selected from the group consisting of a carboxylic acid or salt thereof, a sulfonic acid or salt thereof, a phosphonic acid or salt thereof, a mono ester of phosphoric acid or salt thereof and a mono ester of sulfuric acid or salt thereof.

Preferred compounds according to general formula I: In a preferred embodiment, R₁, R₂, R₃ and R₄ are independently selected from the group consisting of a hydrogen, a methyl group, a halogen, more preferably a chlorine atom, and a methoxy group.

In a further preferred embodiment L₁ is selected from the group consisting of a substituted or unsubstituted alkyl group and a substituted or unsubstituted alkaryl group. In the most preferred embodiment, L₁ is further substituted with at least one functional group selected from the group consisting of a carboxylic acid or salt thereof, a sulfonic acid or salt thereof, a phosphonic acid or salt thereof, a mono ester of phosphoric acid or salt thereof and a mono ester of sulfuric acid or salt thereof, a carboxylic acid or salt thereof and a sulfonic acid or salt thereof being more preferred.

In another preferred embodiment A₁ is selected from the group consisting of a carboxylic acid or salt thereof and a sulfonic acid or salt.

Typical examples of compounds according to general formula I are given in Table 1 without being limited thereto.

**Table 1.**

| | |
|---|---|
| 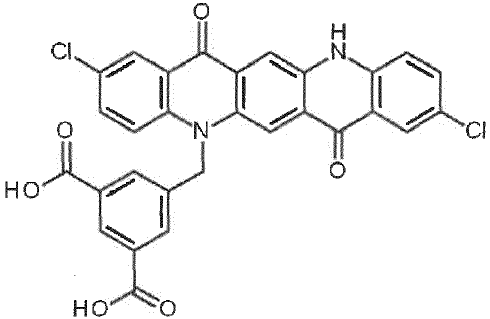 | QUIN-1 |
| 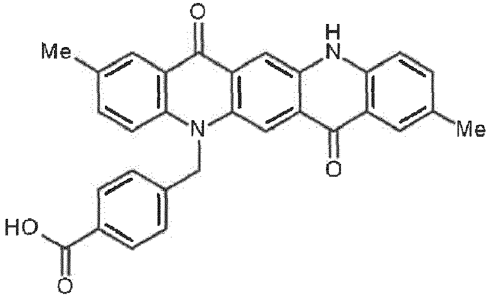 | QUIN-2 |
| 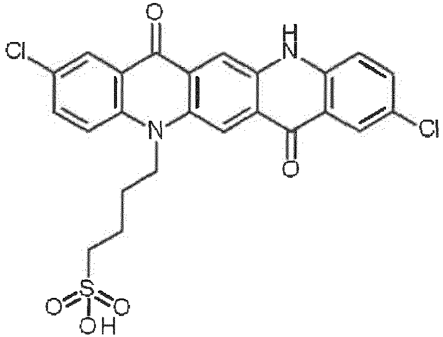 | QUIN-3 |
| 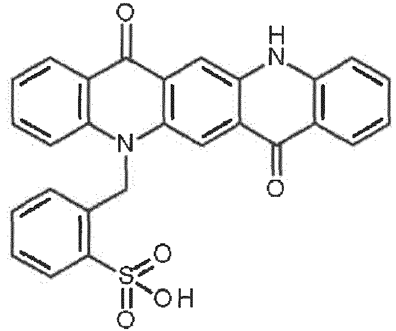 | QUIN-4 |
| | QUIN-5 |
| 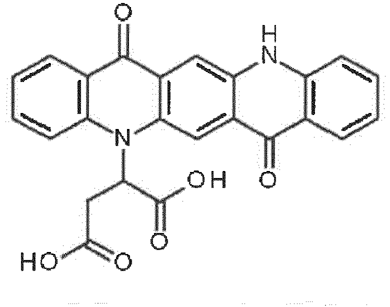 | |
| 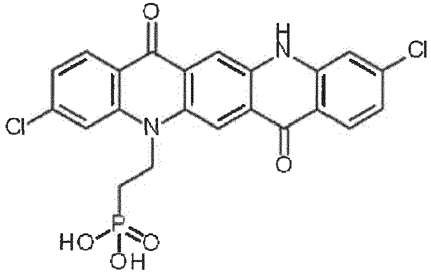 | QUIN-6 |
| 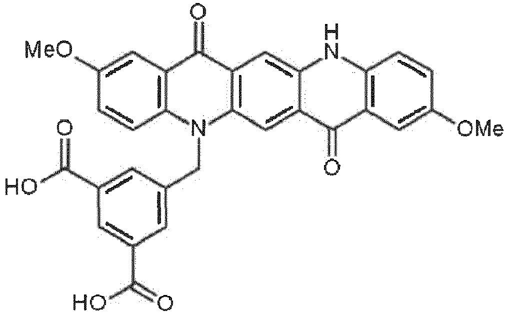 | QUIN-7 |

Preferred compounds according to general formula II: In a preferred embodiment, R₅, R₆, R₇, R₈, R₉ and R₁₀ are independently selected from the group consisting of a hydrogen, a methyl group, a halogen, more preferably a chlorine group, a t.butyl group, a phenyl group and a nitrile.

In a further preferred embodiment L₂ is selected from the group consisting of a substituted or unsubstituted alkyl group and a substituted or unsubstituted alkaryl group. In the most preferred embodiment, L₂ is further substituted with at least one functional group selected from the group consisting of a carboxylic acid or salt thereof, a sulfonic acid or salt thereof, a phosphonic acid or salt thereof, a mono ester of phosphoric acid or salt thereof and a mono ester of sulfuric acid or salt thereof, a carboxylic acid or salt thereof and a sulfonic acid or salt thereof being more preferred.

In another preferred embodiment A₂ is selected from the group consisting of a carboxylic acid or salt thereof and a sulfonic acid or salt.

Typical examples of compounds according to general formula II are given in Table 2 without being limited thereto.

**Table 2.**

| | |
|---|---|
| 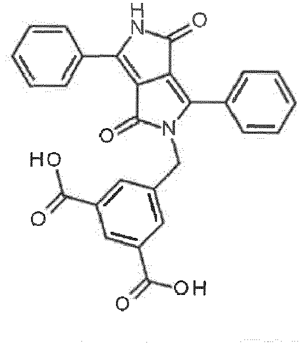 | DPP-1 |
| 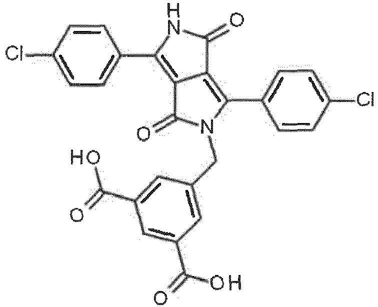 | DPP-2 |
| | DPP-3 |
| 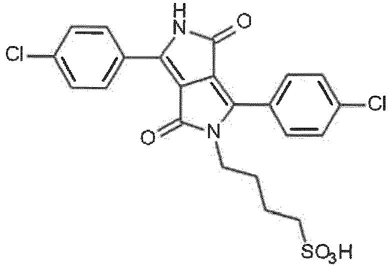 | |
| 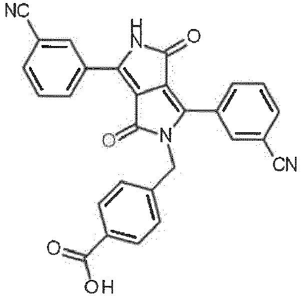 | DPP-4 |
| 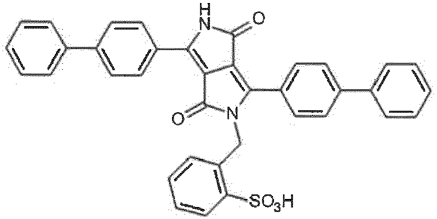 | DPP-5 |
| 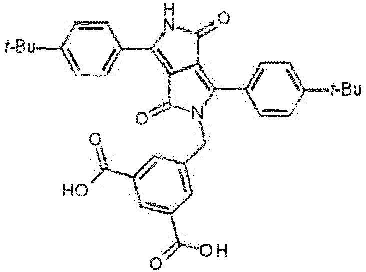 | DPP-6 |

In a preferred embodiment, said compound according to general formula I or general formula II is added between 0.5 to 10 w%, more preferably between 0.5 to 5 w% and most preferably between 1 to 4 w% relative to the pigment.

Said compound according to general formula I or general formula II can be added during the dispersion step of the pigment. In a more preferred embodiment, said compound according to general formula I or general formula II is added as an additive after the dispersion step of the pigment. In the most preferred embodiment, said compound according to general formula I or general formula II is converted into a salt and added to a pre-prepared dispersion of a pigment selected from the group consisting of a quinacridone and a diketopyrrolopyrrole.

### A.2. Pigment

The pigments comprised in the ink according to the invention are quinacridones or diketopyrrolopyrroles, preferably the ones having a C₂ symmetry axis through the chromophore.

Particularly preferred quinacridones are Pigment Red 122, Pigment Violet 19, Pigment Red 202 and Pigment Red 209 or solid solutions thereof.

Particularly preferred diketopyrrolopyrroles are Pigment Red 254, Pigment Red 255, Pigment Red 264, Pigment Red 270, Pigment Red 272, Pigment Orange 73 and Pigment Orange 71.

### A.3. Resin particle comprising polyurea, polyurethane or a selection thereof

In a preferred embodiment said resin particle comprised in the inkjet ink of the invention, is a poly(urethane) latex, stabilized by both ionic and non ionic hydrophilic groups, preferably a carboxylic acid and salt thereof and a polyethylene oxide).

The polyurethane resin is to be incorporated in the ink formulation as a dispersion and may be selected from the group consisting of aliphatic polyurethane dispersions, aromatic polyurethane dispersions, anionic polyurethane dispersions, non-ionic polyurethane dispersions, aliphatic polyester polyurethane dispersions, aliphatic polycarbonate polyurethane dispersions, aliphatic acrylic modified polyurethane dispersions, aromatic polyester polyurethane dispersions, aromatic polycarbonate polyurethane dispersions, aromatic acrylic modified polyurethane dispersions, for example, or a combination of two or more of the above.

A preferred urethane resin to be used as dispersion in the ink of the invention is a polyester resin including a structural unit containing a urethane bond. Among such resins, a water-soluble or water-dispersible urethane-modified polyester resin is preferred. It is preferable that the urethane-modified polyester resin include at least one structural unit derived from a hydroxyl group-containing polyester resin (polyester polyol) and at least one structural unit derived from an organic polyisocyanate.

Furthermore, the hydroxyl group-containing polyester resin is a resin formed by an esterification reaction or transesterification reaction between at least one polybasic acid component and at least one polyhydric alcohol component.

A more preferred polyurethane resin to be included in the ink of the invention is a polyurethane resin obtainable by reacting a polyester polyol, a polyether diol, a polyol containing an anionic group and a polyisocyanate. A particular preferred polyurethane resin is a polyurethane resin obtainable by reacting a polyester polyol, a polyether diol, a polyol containing an anionic group and a polyisocyanate, and wherein the polyester polyol is obtained by reacting an aromatic polycarboxylic acid and a polyol. Examples of suitable polyurethane resins and their preparations are disclosed in the unpublished patent application WO2018/077624A.

Some other examples of suitable polyurethane dispersions are NEOREZ R-989, NEOREZ R-2005, and NEOREZ R-4000 (DSM NeoResins); BAYHYDROL UH 2606, BAYHYDROL UH XP 2719, BAYHYDROL UH XP 2648, and BAYHYDROL UA XP 2631 (Bayer Material Science); DAOTAN VTW 1262/35WA, DAOTAN VTW 1265/36WA, DAOTAN VTW 1267/36WA, DAOTAN VTW 6421/42WA, DAOTAN VTW 6462/36WA (Cytec Engineered Materials Inc., Anaheim CA); and SANCURE 2715, SANCURE 20041, SANCURE 2725 (Lubrizol Corporation), for example, or a combination of two or more of the above.

The concentration of the resin in the ink jet ink according to the invention is at least 1 (wt.)% and preferably lower than 30 (wt.)%, more preferably lower than 20 (wt.)%.

In a particularly preferred embodiment said resin particle is a nanocapsule, prepared via interfacial polymerization of a di- or multifunctional isocyanate. The nanocapsules are composed of a polymeric shell surrounding a core; wherein the capsules are dispersed in the aqueous medium using a dispersing group covalently bonded to the polymeric shell; wherein the dispersing group is selected from the group consisting of a carboxylic acid or salt thereof, a sulfonic acid or salt thereof, a phosphoric acid ester or salt thereof, a phosphonic acid or salt thereof, an ammonium group, a sulfonium group, and a phosphonium group. The core may comprise a pigment but preferably the core may contain one or more chemical reactants capable of forming a reaction product upon application of heat and/or light; and wherein the capsules have an average particle size of no more than 4 µm as determined by dynamic laser diffraction.

The capsules are preferably present in the inkjet ink in amount of no more than 27 wt.%, preferably between 5 and 25 wt.% based on the total weight of the inkjet ink. It was observed that above 27 wt.% jetting was not always so reliable.

The capsules have an average particle size of no more than 4 µm as determined by dynamic laser diffraction. The nozzle diameter of inkjet print heads is usually 20 to 35 µm. Reliable inkjet printing is possible if the average particle size of the capsules is five times smaller than the nozzle diameter. An average particle size of no more than 4 µm allows jetting by print heads having the smallest nozzle diameter of 20 µm. In a more preferred embodiment, the average particle size of the capsules is ten times smaller than the nozzle diameter. Hence preferably, the average particle size is from 0.05 to 2 µm, more preferably from 0.10 to 1 µm. When the average particle size of the capsule is smaller than 2 µm, excellent resolution and dispersion stability with time are obtained.

The capsules are dispersed in the aqueous medium of the inkjet ink using a dispersing group covalently bonded to the polymeric shell. The dispersing group is selected from the group consisting of a carboxylic acid or salt thereof, a sulfonic acid or salt thereof, a phosphoric acid ester or salt thereof, a phosphonic acid or salt thereof, an ammonium group, a sulfonium group, and a phosphonium group.

The dispersing group can be used in combination with a polymeric dispersant in order to accomplish steric stabilization. For example, the polymeric shell may have covalently bonded carboxylic acid groups that interact with amine groups of a polymeric dispersant. However, in a more preferred embodiment, no polymeric dispersant is used and dispersion stability of the inkjet ink is accomplished solely by electrostatic stabilization. For example, a slightly alkaline aqueous medium will turn the carboxylic acid groups covalently bonded polymeric shell may into ionic groups, whereafter the negatively charged capsules have no tendency to agglomerate. If sufficient dispersing groups are covalently bonded to the polymeric shell, the capsule becomes a so-called self-dispersing capsule.

Preferred examples of the polymeric shell material include polyureas and polyurethanes.

In the present invention preferably a polymerization method is used, as it allows the highest control in designing the capsules. More preferably interfacial polymerization is used to prepare the capsules used in the invention. This technique is well-known and has been reviewed by Zhang Y. and Rochefort D. (Journal of Microencapsulation, 29(7), 636-649 (2012) and by Salitin (in Encapsulation Nanotechnologies, Vikas Mittal (ed.), chapter 5, 137-173 (Scrivener Publishing LLC (2013)).

Interfacial polymerisation is a particularly preferred technology for the preparation of capsules according to the present invention. In interfacial polymerization, such as interfacial polycondensation, two reactants meet at the interface of the emulsion droplets and react rapidly. The capsules making part of the inkjet ink according to the invention can be prepared as described in [047-054] of WO2015/158649A.

The capsule dispersion can then be completed into an inkjet ink by addition of e.g. water, humectants, surfactant and the like.

The core of the capsule may contain reactants which are capable of forming a reaction product upon the application of heat and/or light.

Other additives may be included into the core of the capsule such as, for example, pigments, light stabilizers, conductive particles and polymers, magnetic particles, or other compounds suitable for the specific application for which the inkjet ink is used.

In a preferred embodiment of the inkjet ink according to the present invention, the core of the nanocapsule may include a thermally curable compound. The thermally curable compound is preferably a low molecular, oligomer or polymer compound functionalized with at least one functional group selected from the group consisting of an epoxide, an oxetane, an aziridine, an azetidine, a ketone, an aldehyde, a hydrazide and a blocked isocyanate. In a further preferred embodiment, the thermally curable compound or thermally reactive chemistry is selected from the group consisting of an optionally etherified condensation product of formaldehyde and melamine, an optionally etherified condensation product of formaldehyde and ureum and a phenol formaldehyde resin, preferably a resole.

The thermally reactive chemistry can be a one component or a two component system. A one component system is defined as a reactive system that is capable of forming a polymeric resin or crosslinked network by reacting on its own upon thermal activation. A two component system is defined as a reactive system that is capable of forming a polymeric resin or crosslinked network by reacting with a second component in the system upon thermal activation. The second component can be present in the aqueous continuous phase, in a separate dispersed phase, e.g. in the core of a capsule, on the substrate used for inkjet printing or a combination thereof. Typical two component thermally reactive systems are selected from the group consisting of a ketone or aldehyde and a hydrazide, an epoxide or oxetane and an amine, a blocked isocyanate and an alcohol and a blocked isocyanate and an amine. Blocked isocyanates are particularly preferred.

In a preferred embodiment, the blocked isocyanate is a polyfunctional blocked isocyanate having two to six blocked isocyanate functions. Tri- and tetrafunctional blocked isocyanates are particularly preferred.

Preferred blocked isocyanates are precursors capable of forming a di- or multifunctional isocyanate upon thermal activation selected from the group of hexamethylene diisocyanate, isophorone diisocyanate, tolyl diisocyanate, xylylene diisocyanate, a hexamethylene diisocyanate trimer, trimethylhexylene diisocyanate, diphenylmethane diisocyanate, dicyclohexylmethane diisocyanate and condensation products of one or more of the previous isocyanates. Other preferred blocked isocyanates are derivatives from the Takenate^{™} series of isocyanates (Mitsui), the Duranate^{™} series (Asahi Kasei Corporation) and the Bayhydur^{™} series (Bayer AG).

Suitable blocked isocyanates can be selected from the Trixene^{™} series (Baxenden Chemicals LTD) and the Bayhydur^{™} series (Bayer AG).

Preferred examples of blocked isocyanates are given in Table 1 of WO2015/158649A.

The reactive chemistry in the core may also be responsive to light, such as UV light. UV curable reactive chemistry contains one or more chemical reactants, such as a monomer, oligomer or polymer, which are curable by free radical polymerization or by cationic polymerization. In a preferred embodiment, the monomer, oligomer or polymer includes at least one acrylate group as polymerisable group.

In addition to the monomer, oligomer or polymer that are curable by free radical polymerization or by cationic polymerization in the core of the capsule, water soluble monomers and oligomers may also be included into the aqueous medium.

The inkjet ink preferably includes at least one photoinitiator. Although water soluble or water dispersible photoinitiators may be used in the aqueous medium, preferably the at least one photoinitiator is present in the core of the capsule. Preferably also at least one co-initiator is present in the inkjet ink. Similarly the at least one co-initiator may be present in the aqueous medium, but is preferably present in the core of the capsule.

Any polymerisable compound commonly known in the art may be employed. A combination of monomers, oligomers and/or polymers may be used. The monomers, oligomers and/or polymers may possess different degrees of functionality, and a mixture including combinations of mono-, di-, tri- and higher functionality monomers, oligomers and/or polymers may be used.

Particularly preferred for use as a free radical curable compound in the inkjet ink are monofunctional and/or polyfunctional acrylate monomers, oligomers or prepolymers, such as disclosed in [0072] of WO2015/158649A.

Other suitable monofunctional acrylates are the ones disclosed in [0073] of WO2015/158649A.

Other suitable difunctional acrylates are disclosed in [0074] of WO2015/158649A.

Other suitable trifunctional acrylates include propoxylated glycerine triacrylate and ethoxylated or propoxylated trimethylolpropane triacrylate.

Other higher functional acrylates include di-trimethylolpropane tetraacrylate, dipentaerythritol pentaacrylate, ethoxylated pentaeryhtitol tetraacrylate, methoxylated glycol acrylates and acrylate esters.

Furthermore, methacrylates corresponding to the above-mentioned acrylates may be used with these acrylates. Of the methacrylates, methoxypolyethylene glycol methacrylate, methoxytriethylene glycol methacrylate, hydroxyethyl methacrylate, phenoxyethyl methacrylate, cyclohexyl methacrylate, tetraethylene glycol dimethacrylate, and polyethylene glycol dimethacrylate are preferred due to their relatively high sensitivity and higher adhesion to an ink-receiver surface.

Furthermore, the inkjet ink may also contain polymerizable oligomers. Examples of these polymerizable oligomers include epoxy acrylates, aliphatic urethane acrylates, aromatic urethane acrylates, polyester acrylates, and straight-chained acrylic oligomers.

In a preferred embodiment, the free radical curable compound in the inkjet ink includes at least one monomer selected from the group consisting of N-vinyl caprolactam, phenoxyethyl acrylate, dipropyleneglycoldiacrylate, ethoxylated trimethylolpropane triacrylate, pentaerythritol tetraacrylate, and cyclic trimethylolpropane formal acrylate.

The polymerisable compound may also be a cationically polymerisable compound. Suitable examples of cationically curable compounds can be found in Advances in Polymer Science, 62, pages 1 to 47 (1984) by J. V. Crivello. The cationic curable compound may contain at least one olefin, thioether, acetal, thioxane, thietane, aziridine, N, O, S or P heterocycle, aldehyde, lactam or cyclic ester group.

Examples of cationic polymerisable compounds include monomers and/or oligomers epoxides, vinyl ethers, styrenes, oxetanes, oxazolines, vinylnaphthalenes, N-vinyl heterocyclic compounds, tetrahydrofurfuryl compounds.

Suitable cationic curable compounds having at least one epoxy group are listed in the "Handbook of Epoxy Resins" by Lee and Neville, McGraw Hill Book Company, New York (1967) and in "Epoxy Resin Technology" by P. F. Bruins, John Wiley and Sons New York (1968).

Examples of cationic curable compounds having at least one epoxy group are disclosed in in [0087] of WO2015/158649A.

Suitable epoxy compounds comprising at least two epoxy groups in the molecule are alicyclic polyepoxide, polyglycidyl ester of polybasic acid, polyglycidyl ether of polyol, polyglycidyl ether of polyoxyalkylene glycol, polyglycidyl ester of aromatic polyol, polyglycidyl ether of aromatic polyol, urethane polyepoxy compound, and polyepoxy polybutadiene.

Examples of cycloaliphatic diepoxides include copolymers of epoxides and hydroxyl components such as glycols, polyols, or vinyl ether, such as 3,4-epoxycyclohexylmethyl-3', 4'-epoxycyclohexylcarboxylate; bis (3,4-epoxycylohexylmethyl) adipate; limonene diepoxide; diglycidyl ester of hexahydrophthalic acid.

Examples of vinyl ethers having at least one vinyl ether group are disclosed in [0090] of WO2015/158649A.

Suitable examples of oxetane compounds having at least one oxetane group are disclosed in [0091] of WO2015/158649A.

If the one or more chemical reactants in the core of the capsule are one or more free radical curable compounds, then the photoinitiator is a Norrish Type I or II photoinitiator. If the one or more chemical reactants in the core of the capsule are one or more cationically curable compounds, then the photoinitiator is a cationic photoinitiator.

The photoinitiator is preferably a free radical initiator. Two types of free radical photoinitiators can be distinguished and used in the inkjet inks of the present invention. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or co-initiator. Both type I and type II photoinitiators can be used in the present invention, alone or in combination.

Suitable photo-initiators are disclosed in CRIVELLO, J.V., et al. VOLUME III: Photoinitiators for Free Radical Cationic . 2nd edition. Edited by BRADLEY, G.. London,UK: John Wiley and Sons Ltd, 1998. p.287-294.

Specific examples of photo-initiators may include, but are not limited to, the following compounds or combinations thereof as disclosed in [0095] of WO2015/158649A.

Suitable commercial photo-initiators include the ones as disclosed in [0096] of WO2015/158649A.

For safety reasons, the photoinitiator is preferably a so-called diffusion hindered photoinitiator. A diffusion hindered photoinitiator is a photoinitiator which exhibits a much lower mobility in a cured layer of the curable inkjet ink than a monofunctional photoinitiator, such as benzophenone. Several methods can be used to lower the mobility of the photoinitiator. One way is to increase the molecular weight of the photoinitiator so that the diffusion speed is reduced, e.g. polymeric photoinitiators. Another way is to increase its reactivity so that it is built into the polymerizing network, e.g. multifunctional photoinitiators (having 2, 3 or more photoinitiating groups) and polymerizable photoinitiators. The diffusion hindered photoinitiator is preferably selected from the group consisting of multifunctional photoinitiators, oligomeric photoinitiators, polymeric photoinitiators and polymerizable photoinitiators. Most preferably the diffusion hindered photoinitiator is a polymerizable initiator or a polymeric photoinitiator.

Suitable diffusion hindered photoinitiators are also those disclosed in EP 2053101A in paragraphs [0074] and [0075] for difunctional and multifunctional photoinitiators, in paragraphs [0077] to [0080] for polymeric photoinitiators and in paragraphs [0081] to [0083] for polymerizable photoinitiators.

Other preferred polymerizable photoinitiators are those disclosed in EP 2065362A and EP2161264A.

If the core of the capsule contains one or more cationically radical curable compounds, then the core contains at least one cationic photoinitiator. A cationic photoinitiator is a compound that generates acid and initiates cationic polymerization upon irradiation by UV light. Any known cationic photoinitiator may be used. The cationic photoinitiator may be used alone as a single initiator or as a mixture of two or more initiators.

Suitable photocationic polymerization initiators include diazonium salts, phosphonium salts, sulfonium salts, iodonium salts, imide sulfonates, oxime sulfonates, diazo disulfones, disulfones, and o-nitrobenzyl sulfonates. Examples of these cationic photoinitiators are described in US 2006222832A, US 3779778 and US 2008055379A.

A preferred amount of the one or more free radical and/or cationic photoinitiators is 0 - 30 wt.%, more preferably 0.1 - 20 wt%, and most preferably 0.3 - 15 wt.% of the total weight of the polymerizable composition.

In order to increase the photosensitivity further, the free radical curable inkjet ink may additionally contain co-initiators. Suitable examples of co-initiators can be categorized in three groups:
(1) tertiary aliphatic amines such as methyldiethanolamine, dimethylethanolamine, triethanolamine, triethylamine and N-methylmorpholine;
(2) aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate; and
(3) (meth)acrylated amines such as dialkylamino alkyl(meth)acrylates (e.g., diethylaminoethylacrylate) or N-morpholinoalkyl-(meth)acrylates (e.g., N-morpholinoethyl-acrylate).

The preferred co-initiators are aminobenzoates.

The one or more co-initiators included into the radiation curable inkjet ink are preferably diffusion hindered co-initiators for safety reasons. A diffusion hindered co-initiator is preferably selected from the group consisting of non-polymeric di- or multifunctional co-initiators, oligomeric or polymeric co-initiators and polymerizable co-initiators. More preferably the diffusion hindered co-initiator is selected from the group consisting of polymeric co-initiators and polymerizable co-initiators.

The free radical curable inkjet ink preferably comprises a co-initiator in an amount of 0.1 to 50 wt.%, more preferably in an amount of 0.5 to 25 wt%, most preferably in an amount of 1 to 10 wt.% of the total weight of the polymerizable composition.

### A.4. Water soluble organic solvent

The inkjet ink of the invention contains, besides water as a solvent, also a water-soluble organic solvent. Examples of water-soluble organic solvents include polyhydric alcohols such as diethylene glycol, triethylene glycol, dipropylene glycol, glycerol, 1,3-propanediol, 1,3-butanediol, 1,4-butanediol, 2,2-dimethyl-1, 3-propanediol, 2-methyl-1, 3-propanediol, 1,2-pentanediol, 2,4-pentanediol, 1,5-pentanediol,1,6-hexanediol, 2-ethyl-1, 3-hexanediol, 1,2-hexanediol and 2,5-hexanediol, polyhydric alcohol alkyl ethers such as dipropylene glycol n-propyl ether, tripropylene glycol methyl ether, tripropylene glycol n-propyl ether, propylene glycol phenyl ether, triethylene glycol methyl ether, triethylene glycol methyl ether, triethylene glycol ethyl ether, diethylene glycol n-hexyl ether and ethylene glycol phenyl ether, and nitrogen-containing heterocyclic compounds such as 2-pyrrolidone and N-methylpyrrolidone.

Other preferred water soluble organic solvents include ethylene glycol, propylene glycol, 1,2-butanediol, 2,3-butanediol, 2-methyl-2, 4-pentanediol, dipropylene glycol monomethyl ether, propylene glycol n-butyl ether, propylene glycol t-butyl ether, diethylene glycol methyl ether, ethylene glycol n-propyl ether and ethylene glycol n-butyl ether.

The content of the water-soluble organic solvent, in the aqueous inkjet ink is preferably 20% by mass or more and less than 70% by mass. If the content is less than 20% by mass, reliable jetting might be difficult, due to for instance a viscosity mismatch between ink and head. If the content exceeds 70% by mass, the ink loses its water based, more green character.

The water-soluble organic solvent is preferably a mixture of organic solvents comprising 2-pyrrolidone and 1,2-hexanediol, optionally together with glycerol.

### A.5. Humectant

The ink jet ink of the invention may contain at least one humectant to prevent the clogging of nozzles in an inkjet print head, due to its ability to slow down the evaporation rate of the inkjet ink, especially the water in the inkjet printing liquid. The humectant is an organic solvent having a higher boiling point than water.

Suitable humectants are disclosed in [0114] of WO2015/158649A. A preferred humectant is glycerol or a derivative or isomer of 2-pyrolidone.

The humectant is preferably added to the inkjet printing liquid in an amount of 0.1 to 20 wt% based on the total weight of the inkjet printing liquid.

### A.6. Surfactant

In the ink used in the present invention, a surfactant may be added in order to ensure wettability onto the substrate. The amount of the surfactant added is preferably from 0 wt.% to 5 wt.% as an active component in the ink. If the amount exceeds 5% by mass, the ink easily foams to cause non-discharge. The surfactant that can be used is not particularly limited as long as it satisfies the above limitation.

While any of an amphoteric surfactant, a non-ionic surfactant, and an anionic surfactant can be used, non-ionic surfactants such as polyoxyethylene alkyl phenyl ether, polyoxyethylene alkyl ester, polyoxyethylene alkylamine, polyoxyethylene alkyl amide, a polyoxyethylene propylene block polymer, sorbitan fatty acid ester, polyoxyethylene sorbitan fatty acid ester and an ethylene oxide adduct of acetylene alcohol are preferably used in terms of a relationship between dispersing stability of the colour material and image quality. In addition, a fluorine-based surfactant and a silicon-based surfactant can be used in combination (or singly) depending on formulation.

Suitable surfactants are siloxane based surfactants such as Tego Twin 4000 from Evonik Industries, Tegowet 270 from Evonik industries, Hydropalat WE3220 from BASF, silane based surfactants such as Silwet HS312 from Momentive and fluor containing surfactants such as: Thetawet FS8150 from Neochem GMBH, Capstone FS3100 from Dupont, Tivida FL2500 from Merck and surfactants from the Dynol, Envirogem & Surfynol series from Air products.

### B. Inkjet ink set

The aqueous inkjet ink according to the invention is preferably used in combination with at least one other inkjet ink to form an inkjet ink set. These other inkjet inks may be black, cyan, magenta, yellow, red, orange, white, violet, blue, green, brown, mixtures thereof, and the like.

In a preferred embodiment the inkjet ink set comprises at least a cyan ink, a magenta ink, a yellow ink and a black ink. The CMYK ink set may also be extended with extra inks such as red, green, blue, and/or orange to enlarge the colour gamut of the ink set. The CMYK ink set may also be extended by the combination of full density and light density inks of both color inks and/or black inks to improve the image quality by lowered graininess.

The colour pigment for the other inkjet inks may be chosen from those disclosed by HERBST, Willy, et al. Industrial Organic Pigments, Production, Properties, Applications. 3rd edition. Wiley - VCH , 2004. ISBN 3527305769.

Among them, carbon black (Pigment Black 7) can be preferably used, and examples thereof include carbon blacks available from Cabot Corporation under trademarks Regal, Black Pearls, Elftex, Monarch, Regal, Mogul and Vulcan (for example, Black Pearls 2000, 1400,1300, 1100, 1000, 900, 880, 800, 700 and 570, Black Pearls L, Elftex 8, Monarch 1400, 1300, 1100, 1000, 900, 880, 800 and 700, Mogul L, Regal 330, 400 and 660, and Vulcan P), and SENSIJET BlackSDP100 (SENSIENT), SENSIJET BlackSDP1000 (SENSIENT) and SENSIJET BlackSDP2000 (SENSIENT).

Particular preferred pigments are C.I. Pigment Yellow 1, 3, 10, 12, 13, 14, 17, 55, 65, 73, 74, 75, 83, 93, 97, 109, 111, 120, 128, 138, 139, 150, 151, 154, 155, 180, 181, 185, 194 and 213. Pigment Orange 5, 13, 16, 17, 36, 43 and 51, C.I. Pigment Red I, 2, 3, 5, 17, 22, 23, 31, 38, 48:2, 48:2 (Permanent Red 2B (Ca)), 48:3, 48:4, 49:I, 52:2, 53:I, 57:I (Brilliant Carmine 6B), 60:I, 63:I, 63:2, 64:I, 81, 83, 88, 101 (Rouge), 104, 105, 106, 108 (Cadmium Red), 112, 114, 122 (Quinacridone Magenta), 123, 146, 149, 166, 168, 170, 172, 177, 178, 179, 185, 190, 193, 209, 219 and 254, C.I. Pigment Violet I (Rhodamine Lake), 3, 5:I, 16, 19, 23 and 38, C.I. Pigment Blue I, 2, 15 (Phthalocyanine Blue), 15:I, 15:2, 15:3 (Phthalocyanine Blue), 16, 17:I, 56, 60 and 63; and C.I. Pigment Green I, 4, 7, 8, 10, 17, 18 and 36. C.I. Pigment Brown 6 and 7.

In another preferred embodiment, the inkjet ink according to the invention may be used in combination with an aqueous pre-treatment liquid to form a liquid set. The aqueous pre-treatment liquid may be applied to a substrate prior to jetting the inkjet ink according to the invention in order to prevent the occurance of ink bleed on non-porous substrates or the penetration of the pigments into porous substrates or the fibres of fabrics. The pre-treatment liquid preferably comprises a pre-treatment agent which can be a flocculant to agglomerate pigments contained in the ink composition and precipitate the polyurethane resins to form a coating film of ink on the substrate or fabric.

Preferred flocculants are one or more materials selected from organic acids and polyvalent metal compounds. Preferred examples of the organic acids include, but are not limited to, acetic acid, propionic acid, and lactic acid. Examples of the polyvalent metallic compounds include, but are not limited to, titanium compounds, chromium compounds, copper compounds, cobalt compounds, strontium compounds, barium compounds, iron compounds, aluminium compounds, calcium compounds, magnesium compounds, and salts thereof (polyvalent metal salts).

Other preferred flocculants are cationic polymers such as quaternized polyamines, dicyandiamide polycations, diallyldimethyl ammonium chloride copolymers, quaternized dimethylaminoethyl(meth)acrylate polymers, quaternized vinylimidizol polymers, alkyl guanidine polymers, alkoxylated polyethylene imines, and mixtures thereof. As a non-limiting example, one preferred material is Floquat FL2350, a quaternized polyamine derived from epichlorohydrin and dimethylamine, commercially available from SNF Inc.

### C. Ink jet recording method

The inkjet recording method of the present invention includes at least an ink jetting step of the aqueous inkjet ink according to the invention onto a substrate, followed by a drying or heating step of the printed substrate. Especially when the aqueous ink comprises a capsule wherein a thermal reactive compound is encapsulated, a heating step is preferred to for instance cure the ink. When a reactant capable of forming reagents upon application of UV light is incorporated in the core, an irradiation step after the jetting step is preferred to cure the ink.

The ink jet ink of the present invention is suitable for ink jet printing on different substrates, porous and non-porous ones. Porous substrates include paper, card board, white lined chipboard, corrugated board, packaging board, wood, ceramics, stone, leather and textile. Non-porous substrates include metal, synthetic leather, glass, polypropylene, polyvinylchloride, PET, PMMA, polycarbonate, polyamide, polystyrene or co-polymers thereof. The heating step of the substrate is particularly advantageously when non-porous substrates are used in the inkjet recording method of the invention.

In some instances, a pre-treatment liquid as described in § B. may be applied to the substrate prior to printing the inkjet ink of the invention onto the substrate.

The heating temperature in the step of heating the substrate can be changed depending on the type and amount of the water-soluble organic solvent contained in the ink and the minimum film formation temperature of the resin added, and can be further changed depending on the type of a substrate for printing. Especially, heating of non-porous substrates results in an improved image quality in combination with high printing speeds. The heating temperature is generally controlled to 80 °C or lower to prevent deformation of the substrate, but is preferably raised in the range of 40 °C to 80 °C.

The heating temperature after printing is preferably high in terms of drying properties and film formation temperature (to avoid set off during roll up or stacking after printing), but a too high heating temperature is not preferable because the substrate for printing can be damaged and an ink head can also be warmed to a temperature outside its optimal working range.

With respect to such use of a heating apparatus, one or more among many known heating equipments can be used. Examples include equipments for forced-air heating, radiation heating such as IR-radiation, conduction heating, high-frequency drying, and microwave drying, and these can be used singly or in combinations of two or more. Preferably, the heating of the substrate is by contacting the substrate with a heated metal plate. Radiation heating using IR-radiation include SWIR (Short wave infra red radiation), NIR (Near-infra red radiation) and CIR (Carbon infra red radiation).

While the ink of the present invention can be used for printing a high-quality image, the substrate is advantageously heated before and/or during jetting of the ink in order to form an image having a higher image quality (e.g. coalescence) and high scratch resistance and adhesiveness and in order to achieve high printing speeds.

The ink ejection step is a step of applying a stimulus to the ink constituting the present invention to thereby allow the ink to be ejected, forming an image. An ink ejection unit is a unit for applying a stimulus to the ink constituting the present invention to thereby allow the ink to be ejected, forming an image. The ink ejection unit is not particularly limited, and can be appropriately selected depending on the object. Examples thereof include various recording heads (ink discharge heads), and in particular, one having a head having a plurality of nozzle rows and a sub-tank for accommodating a liquid supplied from a tank for liquid storage to supply the liquid to the head is preferable.

The stimulus can be generated by a stimulus-generating unit, the stimulus is not particularly limited and can be appropriately selected depending on the object, and examples thereof include heat (temperature), pressure, vibration, and light. These may be used singly or in combinations of two or more. Among them, heat and pressure are suitable.

Among them, preferable is the method in which a voltage is applied to a piezo element to allow the ink for recording to be ejected. Since a piezo system does not generate heat, this is efficient for allowing a resin particle-containing ink to be ejected, and is an effective method that causes less nozzle clogging.

In the inkjet recording method of the present invention, it is preferable that heating and drying be further performed even after printing.

### D. EXAMPLES

### D.1. Measuring methods

### D.1.1. Average particle size

The average particle size of a dispersion was measured using a Zetasizer^{™} Nano-S (Malvern Instruments, Goffin Meyvis).

### D.1.2. ink stability

The stability of the aqueous inks is determined by storing the ink in a closed recipient in an oven at 60°C. The gel time is defined as the time needed for the ink to form a gel upon storage. Another way of expressing the stability is `t of precipitation' being the time to the formation of the first observable precipitate was measured upon storage.

### D.2. Materials

All materials used in the following examples were readily available from standard sources such as Sigma-Aldrich (Belgium) and Acros (Belgium) unless otherwise specified. The water used was demineralised water.
- **Cinquasia Magenta RT-235** is a pigment supplied by BASF
- **Ink Jet Magenta E02** is a pigment supplied by Clariant
- **Irgazin Red L3630** is a pigment supplied by BASF
- **Edaplan 492** is a polymeric dispersing agent supplied by Munzing Chemie GmBH
- **Edaplan 482** is a polymeric dispersing agent supplied by Munzing Chemie GmBH
- **Lakeland ACP** is a amphoteric surfactant supplied by Lakeland Laboratories LTD
- **BYKJET 9151** is a polymeric dispersing agent supplied by Byk Chemie GmBH
- **Trixene^{™} BI7982** is supplied by Baxenden Chemicals LTD
- **Trixene BI7963** is a dimethylmalonate blocked isocyanate supplied by Baxenden Chemicals LTD
- **Takenate^{™} D110N** was supplied by Mitsui Chemicals Inc.;
- **Desmodur N75 BA** is an isocyanate supplied by Bayer AG
- **Proxel K** is 5wt.% solution of 1,2-benzisothiazolin-3-one, supplied by Prom Chem UK
- **DISP-M1** is Diamond D75M, a 15 wt.% pigment red 122 dispersion supplied by Diamond Dispersion.
- **DISP-M2** was prepared as follows: 75 g of Ink Jet Magenta E02 was added to a solution of 214.3 g Edaplan 492 and 2 g Proxel K in 208.7 g water and the mixture was stirred for 30 minutes using a Disperlux dispenser. The mixture was coupled to a NETZSCH zeta-mill, filled for 50 % with 0.4 mm yttrium stabilized zirconia beads ("high wear resistant zirconia grinding media" from TOSOH Co.) The mixture was milled under recirculation for 150 minutes at a tip speed of 10.4 m/s, yielding a 15 w% dispersion of Ink Jet Magenta E02. The average particle size was 140 nm.
- **DISP-M3** was prepared as follows 75 g of Ink Jet Magenta E02 was added to a solution of 187.5 g Tego Dispers 750 W and 2 g Proxel K in 235.5 g water and the mixture was stirred for 30 minutes using a Disperlux dispenser. The mixture was coupled to a NETZSCH zeta-mill, filled for 50 % with 0.4 mm yttrium stabilized zirconia beads ("high wear resistant zirconia grinding media" from TOSOH Co.) The mixture was milled under recirculation for 150 minutes at a tip speed of 10.4 m/s, yielding a 15 wt.% dispersion of ink Jet Magenta E02. The average particle size was 165 nm.
- **DISP-Y1** is Diamond D71Y155, a 15 w% pigment yellow 155 dispersion supplied by Diamond Dispersion.
- **DISP-Y2** is Diamond D75Y, a 15 w% pigment yellow 74 dispersion supplied by Diamond Dispersion.
- **DISP-R1** was prepared as follows: 6 g of Irgazin Red L3630 was added to a solution of 3.51 g Edaplan 482 and 0.16 g Proxel K in 30.33 g water. 160 g of 3 mm yttrium stabilized zirconia beads were added and the mixture was milled in a closed vessel for 7 days at room temperature. The yttrium stabilized zirconia beads were removed by filtration, yielding a 15 w% dispersion of Irgazin red L3630. The average particle size was 149 nm.
- **DISP-R2** was prepared as follows: 6 g of Irgazin Red L3630 was added to a solution of 3 g BYKJET 9151 and 0.16 g Proxel K in 30.84 g water. 160 g of 3 mm yttrium stabilized zirconia beads were added and the mixture was milled in a closed vessel for 7 days at room temperature. The yttrium stabilized zirconia beads were removed by filtration, yielding a 15 w% dispersion of Irgazin red L3630. The average particle size was 133 nm.
- **QUIN-1** has been prepared as disclosed in [0252] of WO200706254A
- **QUIN-3** has been prepared as follows: 38.1 g Cinquasia Magenta RT-235 was added to 250 ml DMSO. 22.5 g KOtBU was added to the mixture while stirring. The mixture was heated to 75°C for one hour. The mixture was allowed to cool down to 60°C and 13.7 g of butane sulton and 1.66 g of potassium iodide were added. The reaction was allowed to continue for 24 hours at 65°C. The reaction mixture was allowed to cool down to 30°C and diluted with 500 ml ethyl acetate and 250 ml acetone. The mixture was left to stand for 16 hours. QUIN-3 potassium salt was isolated by filtration and washed with a mixture of ethyl acetate/acetone 2/1. The intermediate potassium salt was dried. 58 g of the salt was isolated. The salt was stirred in a mixture of 200 ml of a concentrated hydrochloric acid solution and 250 ml water at 80°C for one hour. The mixture was allowed to cool down to room temperature and QUIN-3 was isolated by filtration, washed with water and dried. 44 g of QUIN-3 was isolated (yield: 85%).
- **DPP-2** is dispersion synergist and has been prepared as disclosed in [0229] of WO2007060257A as compound DPC-1.
- **CAP-1** was prepared as follows: A solution of 91 g Desmodur N75 BA, 95.2 g Trixene BI7963 and 8 g Lakeland ACP70 in 151 g ethyl acetate was prepared. This solution was added to a solution of 23.1 g Lakeland ACP70, 8.3 g L-lysine and 10.3 g triethanol amine in 310 g water while stirring for 10 minutes using an Ultra-Turrax at a rotation speed of 18000 rpm. An additional 350 g water was added. The ethyl acetate was evaporated at 65° C under reduced pressure, while gradually increasing the vacuum from 500 mbar to 120 mbar. Upon complete evaporation of the ethyl acetate, an additional 250 ml water was evaporated. Water was added to the dispersion to bring it to a total weight of 600 g. The dispersion was stirred for 16 hours at 65°C. The dispersion was allowed to cool down to room temperature. The dispersion was filtered over a 1µm filter. The average particle size was 180 nm.
- **PU-1** is a polyurethane dispersion and was prepared the same way as PU-3 in the patent application WO2019106089.

### Example 1

This example illustrates the difference in interaction of poly(urea) resins with pigments having hydrogen donors and hydrogen acceptors in their crystal planes, such as Pigment Red 122 and pigments having their hydrogen bonds mainly intramolecular, such as Pigment Yellow 155 and Pigment Yellow 74. The orientation of the hydrogen bonds in the crystals can be derived from the crystal structures. The crystal structure of Pigment Red 122 has been disclosed by Mizuguchi et al. (Z. Kristallogr. NCS 217, 525-526 (2002)). The crystal structure of Pigment Yellow 155 has been disclosed by Li et al. (Journal of Molecular Structure, 1173, 246-250 (2018)) and the crystal structure of Pigment yellow 74 has been disclosed by Whitaker and Walker (Acta Cryst., C43, 2137-2141 (1987)).

Pigment Red 122, Pigment Yellow 155 and Pigment Yellow 74 have been formulated into a poly(ureum) based nanocapsule ink according to Table 3. All weight percentage are weight percentages relative to the total composition of the ink.

**Table 3**

| Wt.% of | PY155 | PY74 | PR122 |
|---|---|---|---|
| CAP-1 | 39 | 39 | 39 |
| Glycerol | 17 | 17 | 17 |
| 1,2-propane diol | 17 | 17 | 17 |
| Methyl diethanol amine | 1 | 1 | 1 |
| DISP-Y1 | 26 | - | - |
| DISP-Y2 | - | 26 | - |
| DISP-M1 | - | - | 26 |

The gel time was measured and the results are summarized in Table 4.

**Table 4**

| Ink sample | Gel time (days) |
|---|---|
| PY155 | 28 |
| PY74 | 28 |
| PR122 | 8 |

From Table 4, it can be seen that pigments having hydrogen donors and hydrogen acceptors on their crystal surface have a considerable shorter gel time with the poly(ureum) based nanocapsule compared to pigments having mainly intramolecular hydrogen bonds.

### Example 2

This example illustrates the increase in colloid stability of the inks when adding a compound according to general formula I to a quinacridone based ink.

Dispersion A: A mixture was made containing 8 g of CAP-1, 3.5 g glycerol and 3.5 g 1,2-propane diol.

Dispersion B:15 mg QUIN-1 was converted into its sodium salt by adding 10 mg of a 30w% NaOH solution and 200 mg of methyl diethanol amine. 5

g of DISP-M1 was added and the mixture was stirred for 24 hours at room temperature.

Dispersion C: 15 mg QUIN-3 was converted into its sodium salt by adding 11 mg of a 30w% NaOH solution and 200 mg of methyl diethanol amine. 5

g of DISP-M1 was added and the mixture was stirred for 24 hours at room temperature.

Dispersion D: 200 mg of methyl diethanol amine was added to 5 g of DISP-M1 and the mixture was stirred for 24 hours at room temperature.

Inventive ink INV-1 was prepared by mixing dispersion A and dispersion B and stirring for one hour at room temperature. Inventive ink INV-2 was prepared by mixing dispersion A and dispersion C and stirring for one hour at room temperature. Comparative ink COMP-1 was prepared by mixing dispersion A and dispersion D and stirring for one hour at room temperature.

The gel time was measured and the results are summarized in Table 5.

**Table 5**

| Ink sample | Gel time (days) |
|---|---|
| INV-1 | 19 |
| INV-2 | 19 |
| COMP-1 | 7 |

From table 5, it becomes apparent that adding a compound according to general formula I to quinacridone based inks, considerably increases the shelf life of the inks.

### Example 3

This example illustrates the increase in colloid stability in aqueous poly(urethane) based inks when adding a compound according to general formula I to a quinacridone based ink.

Dispersion E: 15 mg QUIN-1 was converted into its tetrabutyl ammonium salt by adding 55 mg of a 40w% tetrabutyl ammonium hydroxide solution, 1 g pyrrolidone and 200 mg of methyl diethanol amine. 5 g of DISP-M1 was added and the mixture was stirred for 24 hours at room temperature. Dispersion F: 1g pyrrolidone and 200 mg of methyl diethanol amine were added to 5 g of DISP-M1 and the mixture was stirred for 24 hours at room temperature.

Inventive ink INV-3 and comparative ink COMP-2 were prepared according to Table 6. All weight percentage are weight percentages relative to the total composition of the ink.

**Table 6**

| Wt.% of | INV-3 | COMP-2 |
|---|---|---|
| PU-1 | 40 | 40 |
| Dispersion D | 30.75 | - |
| Dispersion F | - | 30.75 |
| Pyrrolidone | 28 | 28 |
| 1,2-hexane diol | 1.25 | 1.25 |

The time of precipitation was measured and results are summarized in Table 7.

**Table 7**

| Ink sample | t of precipitation (days) |
|---|---|
| INV-3 | >15 |
| COMP-2 | 7 |

From table 7, it becomes apparent that adding a compound according to general formula I to quinacridone based inks, considerably increases the shelf life of the inks.

### Example 4

This example illustrates that the combination of compounds according to general formula I in combination with different polymeric dispersing agent significantly increases the colloid stability of quinacridone based aqueous resin based inks.

Dispersion A: A mixture was made containing 8 g of CAP-1, 3.5 g glycerol and 3.5 g 1,2-propane diol.

Dispersion G: 15 mg QUIN-1 was converted into its tetrabutyl ammonium salt by adding 55 mg of a 40w% tetrabutyl ammonium hydroxide solution, 1 g 1,2-propane diol and 200 mg of methyl diethanol amine. 5 g of DISP-M2 was added and the mixture was stirred for 24 hours at room temperature.

Dispersion H: 1g 1,2-propane diol and 200 mg of methyl diethanol amine were added to 5 g of DISP-M2 and the mixture was stirred for 24 hours at room temperature.

Dispersion I: 15 mg QUIN-1 was converted into its tetrabutyl ammonium salt by adding 55 mg of a 40w% tetrabutyl ammonium hydroxide solution, 1 g 1,2-propane diol and 200 mg of methyl diethanol amine. 5 g of DISP-M3 was added and the mixture was stirred for 24 hours at room temperature.

Dispersion J: 1g 1,2-propane diol and 200 mg of methyl diethanol amine were added to 5 g of DISP-M3 and the mixture was stirred for 24 hours at room temperature.

Inventive ink INV-4 was prepared by mixing dispersion A and dispersion G and stirring for one hour at room temperature. Inventive ink INV-5 was prepared by mixing dispersion A and dispersion I and stirring for one hour at room temperature. Comparative ink COMP-3 was prepared by mixing dispersion A and dispersion H and stirring for one hour at room temperature. The comparative ink COMP-4 was prepared by mixing dispersion A and dispersion J and stirring for one hour at room temperature.

The gel time was measured and the results are summarized in Table 8.

**Table 8**

| Ink sample | Gel time (days) |
|---|---|
| INV-4 | 6 |
| COMP-3 | <1 |
| INV-5 | 8 |
| COMP-4 | 3 |

From Table 8, it becomes apparent that adding a compound according to general formula I to quinacridone based inks, considerably increases the shelf life of the inks, in combination with different polymeric dispersing agents.

### Example 5

This example illustrates the increase in stability of diketopyrrolopyrroles in ink formulations when combining polymeric dispersing agents with compounds according to general formula II.

Dispersion K: 15 mg DPP-2 was converted into its tetrabutyl ammonium salt by adding 55 mg of a 40w% tetrabutyl ammonium hydroxide solution, 1 g pyrrolidone and 200 mg of methyl diethanol amine. 5 g of DISP-R1 was added and the mixture was stirred for 24 hours at room temperature. Dispersion L: 1g pyrrolidone and 200 mg of methyl diethanol amine were added to 5 g of DISP-R1 and the mixture was stirred for 24 hours at room temperature.

Dispersion M: 15 mg DPP-2 was converted into its tetrabutyl ammonium salt by adding 55 mg of a 40w% tetrabutyl ammonium hydroxide solution, 1 g pyrrolidone and 200 mg of methyl diethanol amine. 5 g of DISP-R2 was added and the mixture was stirred for 24 hours at room temperature. Dispersion N: 1g pyrrolidone and 200 mg of methyl diethanol amine were added to 5 g of DISP-R2 and the mixture was stirred for 24 hours at room temperature.

Dispersion O: A mixture was made containing 8 g of CAP-1 and 6.0 g 1,2-propane diol.

Inventive ink INV-6 was prepared by mixing dispersion K and dispersion A and stirring for one hour at room temperature. Comparative ink COMP-5 was prepared by mixing dispersion L and dispersion A and stirring for one hour at room temperature. Inventive ink INV-7 was prepared by mixing dispersion M and dispersion A and stirring for one hour at room temperature. Comparative ink COMP-6 was prepared by mixing dispersion N and dispersion A and stirring for one hour at room temperature. Inventive ink INV-8 was prepared by mixing dispersion K and dispersion O and stirring for one hour at room temperature. Comparative ink COMP-7 was prepared by mixing dispersion L and dispersion O and stirring for one hour at room temperature. Inventive ink INV-9 was prepared by mixing dispersion M and dispersion O and stirring for one hour at room temperature. Comparative ink COMP-8 was prepared by mixing dispersion N and dispersion O and stirring for one hour at room temperature.

The gel time was measured and the results are summarized in Table 9.

**Table 9**

| Ink sample | Gel time (days) |
|---|---|
| INV-6 | >14 |
| COMP-5 | 3 |
| INV-7 | >14 |
| COMP-6 | 7 |
| INV-8 | 10 |
| COMP-7 | <1 |
| INV-9 | >14 |
| COMP-8 | <1 |

From Table 9, it becomes apparent that adding a compound according to general formula II to diketopyrrolopyrrole based inks, considerably increases the shelf life of the inks, in combination with different polymeric dispersing agents.

### Example 6

This example illustrates the increase in stability of diketopyrrolopyrroles in ink formulations when combining polymeric dispersing agents with compounds according to general formula I.

Dispersion P: 15 mg QUIN-1 was converted into its tetrabutyl ammonium salt by adding 55 mg of a 40w% tetrabutyl ammonium hydroxide solution, 1 g pyrrolidone and 200 mg of methyl diethanol amine. 5 g of DISP-R2 was added and the mixture was stirred for 24 hours at room temperature. Dispersion N: 1g pyrrolidone and 200 mg of methyl diethanol amine were added to 5 g of DISP-R2 and the mixture was stirred for 24 hours at room temperature.

Dispersion O: A mixture was made containing 8 g of CAP-1 and 6.0 g 1,2-propane diol.

Inventive ink INV-10 was prepared by mixing dispersion P and dispersion A and stirring for one hour at room temperature. Comparative ink COMP-9 was prepared by mixing dispersion N and dispersion A and stirring for one hour at room temperature. Inventive ink INV-11 was prepared by mixing dispersion P and dispersion O and stirring for one hour at room temperature. Comparative ink COMP-10 was prepared by mixing dispersion N and dispersion O and stirring for one hour at room temperature.

The gel time was measured and the results are summarized in Table 10.

**Table 10**

| Ink sample | Gel time (days) |
|---|---|
| INV-10 | >20 |
| COMP-9 | 9 |
| INV-11 | 20 |
| COMP-10 | <1 |

From table 10, it becomes apparent that adding a compound according to general formula I to diketopyrrolopyrrole based inks, considerably increases the shelf life of the inks, in combination with different polymeric dispersing agents.

## Claims

1. An aqueous inkjet ink comprising a resin particle selected from the group consisting of a poly(urea), a poly(urethane) and combinations thereof, a pigment selected from the group consisting of quinacridones and diketopyrrolopyrrole pigments and a compound represented by general formula I or general formula II. 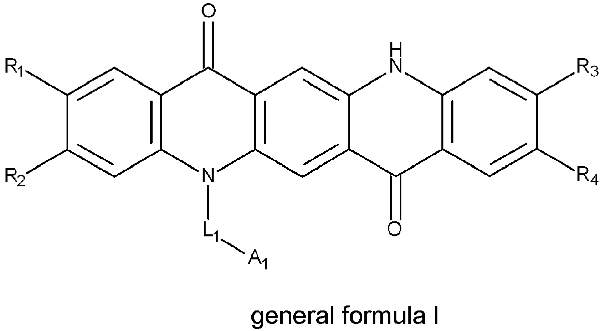 wherein
R₁, R₂, R₃ and R₄ are independently selected from the group consisting of a hydrogen, a substituted or unsubstituted alkyl group, a substituted or unsubstituted aryl group, a halogen and an alkoxy group L₁ represents a divalent linking group comprising no more than 20 carbon atoms
A₁ represents a functional group selected from the group consisting of a carboxylic acid or salt thereof, a sulfonic acid or salt thereof, a phosphonic acid or salt thereof, a mono ester of phosphoric acid or salt thereof and a mono ester of sulfuric acid or salt thereof 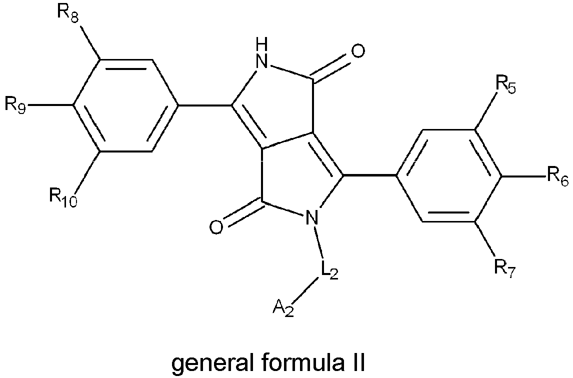 wherein
R₅, R₆, R₇, R₈, R₉ and R₁₀ are independently selected from the group consisting of a hydrogen, a substituted or unsubstituted alkyl group, a substituted or unsubstituted aryl group, a halogen, a nitrile group and an alkoxy group L₂ represents a divalent linking group comprising no more than 20 carbon atoms
A₂ represents a functional group selected from the group consisting of a carboxylic acid or salt thereof, a sulfonic acid or salt thereof, a phosphonic acid or salt thereof, a mono ester of phosphoric acid or salt thereof and a mono ester of sulfuric acid or salt thereof.

2. The aqueous inkjet ink according to claim 1 wherein the quinacridones are selected from the group of Pigment Red 122, Pigment Violet 19, Pigment Red 202, Pigment Red 209 and solid solutions thereof.

3. The aqueous inkjet ink according to claim 1 wherein the diketopyrrolopyrroles are selected from the group of Pigment Red 254, Pigment Red 255, Pigment Red 264, Pigment Red 270, Pigment Red 272, Pigment Orange 73 and Pigment Orange 71.

4. The aqueous inkjet ink according to any of the preceding claims wherein L₁ is selected from the group consisting of a substituted or unsubstituted alkyl group and a substituted or unsubstituted alkaryl group.

5. The aqueous inkjet ink according to claim 4 wherein L₁ is further substituted with at least one functional group selected from the group consisting of a carboxylic acid or salt thereof, a sulfonic acid or salt thereof, a phosphonic acid or salt thereof, a mono ester of phosphoric acid or salt thereof and a mono ester of sulfuric acid or salt thereof.

6. The aqueous inkjet ink according to any of the preceding claims wherein the resin particle is a capsule comprising a polymeric shell containing poly(urea) or poly(urethane) surrounding a core.

7. The aqueous inkjet ink according to claim 6 wherein the core comprises a reactant capable of forming a reagent upon application of heat and/or light.

8. The aqueous inkjet ink according to claim 7 wherein the reactant is a thermally curable compound.

9. The aqueous inkjet ink according to claim 8 wherein the thermally curable compound is a blocked isocyanate.

10. The aqueous inkjet ink according to claims 6 to 9 wherein the polymeric shell comprises a covalently bonded dispersing group selected from the group consisting of a carboxylic acid or salt thereof, a sulfonic acid or salt thereof, a phosphoric acid ester or salt thereof, a phosphonic acid or salt thereof and a polyethylene oxide group.

11. An inkjet ink set comprising a first aqueous inkjet ink as defined in claims 1 to 10 and a second aqueous inkjet ink comprising a pigment which is different from the pigment in the first aqueous inkjet ink.

12. An inkjet recording method including the steps of providing a substrate and subsequently jetting the aqueous inkjet ink as defined in claims 1 to 10 onto the substrate.

## Patentansprüche

1. Eine wässrige Tintenstrahltinte, enthaltend ein Harzpartikel, gewählt aus der Gruppe bestehend aus einem Poly(harnstoff), einem Poly(urethan) und Kombinationen derselben, ein Pigment, gewählt aus der Gruppe bestehend aus Chinacridonen und Diketopyrrolopyrrol-Pigmenten, und eine Verbindung gemäß der allgemeinen Formel I oder der allgemeinen Formel II 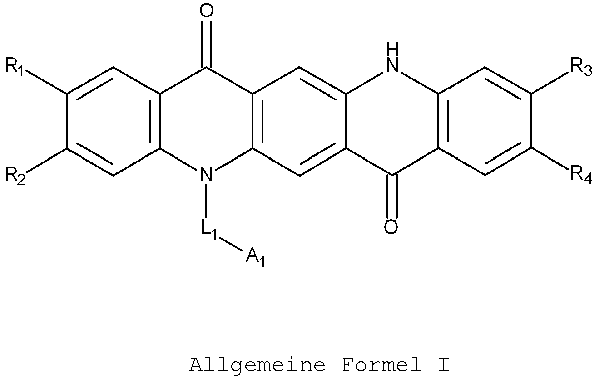 in der
R₁, R₂, R₃ und R₄ unabhängig voneinander aus der Gruppe bestehend aus Wasserstoff, einer substituierten oder nicht-substituierten Alkylgruppe, einer substituierten oder nicht-substituierten Arylgruppe, Halogen und einer Alkoxygruppe gewählt werden,
L₁ eine divalente Verbindungsgruppe, die nicht mehr als 20 Kohlenstoffatome umfasst, bedeutet,
A₁ eine funktionelle Gruppe bedeutet, gewählt aus der Gruppe bestehend aus einer Carbonsäure oder einem Carbonsäuresalz, einer Sulfonsäure oder einem Sulfonsäuresalz, einer Phosphonsäure oder einem Phosphonsäuresalz, einem Phosphorsäuremonoester oder einem Phosphorsäuremonoestersalz und einem Schwefelsäuremonoester oder einem Schwefelsäuremonoestersalz, 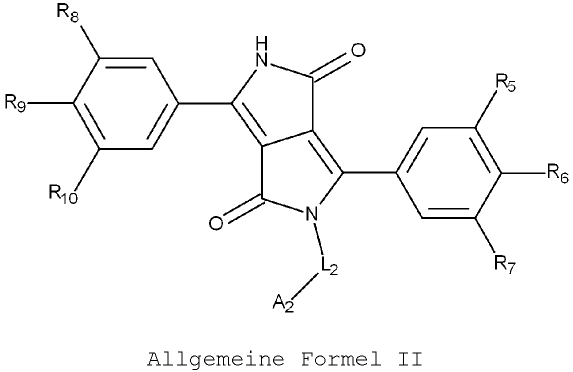 in der
R₅, R₆, R₇, R₈, R₉ und R₁₀ unabhängig voneinander aus der Gruppe bestehend aus Wasserstoff, einer substituierten oder nicht-substituierten Alkylgruppe, einer substituierten oder nicht-substituierten Arylgruppe, Halogen, einer Nitrilgruppe und einer Alkoxygruppe gewählt werden,
L₂ eine divalente Verbindungsgruppe, die nicht mehr als 20 Kohlenstoffatome umfasst, bedeutet,
A₂ eine funktionelle Gruppe bedeutet, gewählt aus der Gruppe bestehend aus einer Carbonsäure oder einem Carbonsäuresalz, einer Sulfonsäure oder einem Sulfonsäuresalz, einer Phosphonsäure oder einem Phosphonsäuresalz, einem Phosphorsäuremonoester oder einem Phosphorsäuremonoestersalz und einem Schwefelsäuremonoester oder einem Schwefelsäuremonoestersalz.

2. Die wässrige Tintenstrahltinte nach Anspruch 1, wobei die Chinacridone aus der Gruppe bestehend aus Pigment Red 122, Pigment Violet 19, Pigment Red 202, Pigment Red 209 und festen Lösungen derselben gewählt werden.

3. Die wässrige Tintenstrahltinte nach Anspruch 1, wobei die Diketopyrrolopyrrole aus der Gruppe bestehend aus Pigment Red 254, Pigment Red 255, Pigment Red 264, Pigment Red 270, Pigment Red 272, Pigment Orange 73 und Pigment Orange 71 gewählt werden.

4. Die wässrige Tintenstrahltinte nach einem der vorstehenden Ansprüche, wobei L₁ aus der Gruppe bestehend aus einer substituierten oder nicht-substituierten Alkylgruppe und einer substituierten oder nicht-substituierten Alkarylgruppe gewählt wird.

5. Die wässrige Tintenstrahltinte nach Anspruch 4, wobei L₁ ferner mit mindestens einer funktionellen Gruppe, gewählt aus der Gruppe bestehend aus einer Carbonsäure oder einem Carbonsäuresalz, einer Sulfonsäure oder einem Sulfonsäuresalz, einer Phosphonsäure oder einem Phosphonsäuresalz, einem Phosphorsäuremonoester oder einem Phosphorsäuremonoestersalz und einem Schwefelsäuremonoester oder einem Schwefelsäuremonoestersalz, substituiert ist.

6. Die wässrige Tintenstrahltinte nach einem der vorstehenden Ansprüche, wobei das Harzpartikel eine Kapsel ist, die eine polymere, Poly(harnstoff) oder Poly(urethan) enthaltende, einen Kern umhüllende Hülle umfasst.

7. Die wässrige Tintenstrahltinte nach Anspruch 6, wobei der Kern einen Reaktanten, der in der Lage ist, bei Erwärmung und/oder Belichtung ein Reagens zu bilden, enthält.

8. Die wässrige Tintenstrahltinte nach Anspruch 7, wobei der Reaktant eine wärmehärtende Verbindung ist.

9. Die wässrige Tintenstrahltinte nach Anspruch 8, wobei die wärmehärtende Verbindung ein blockiertes Isocyanat ist.

10. Die wässrige Tintenstrahltinte nach den Ansprüchen 6 bis 9, wobei die polymere Hülle eine kovalent gebundene dispergierende Gruppe umfasst, gewählt aus der Gruppe bestehend aus einer Carbonsäure oder einem Carbonsäuresalz, einer Sulfonsäure oder einem Sulfonsäuresalz, einem Phosphorsäureester oder einem Phosphorsäureestersalz, einer Phosphonsäure oder einem Phosphonsäuresalz und einer Polyethylenoxidgruppe.

11. Ein Tintenstrahltintensatz, umfassend eine erste wässrige, wie in einem der Ansprüche 1 bis 10 definierte Tintenstrahltinte und eine zweite wässrige Tintenstrahltinte, die ein Pigment, das vom Pigment in der ersten wässrigen Tintenstrahltinte unterschiedlich ist, enthält.

12. Ein Tintenstrahlaufzeichnungsverfahren, umfassend die Schritte, in denen ein Substrat bereitgestellt wird und anschließend die wie in den Ansprüchen 1 bis 10 definierte wässrige Tintenstrahltinte auf das Substrat aufgesprüht wird.

## Revendications

1. Encre aqueuse pour jet d'encre contenant une particule de résine choisie parmi le groupe composé d'une poly(urée), d'un poly(uréthane) et de combinaisons de ceux-ci, un pigment choisi parmi le groupe composé de quinacridones et de pigments de dicétopyrrolopyrrole et un composé répondant à la formule générale I ou à la formule générale II 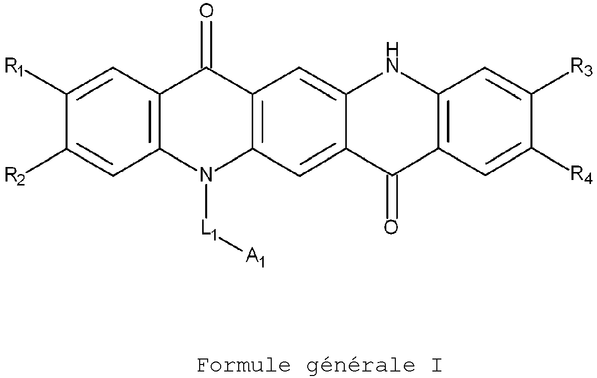 où
R₁, R₂, R₃ et R₄ sont choisis, l'un indépendamment de l'autre, parmi le groupe composé d'hydrogène, d'un groupe alkyle substitué ou non substitué, d'un groupe aryle substitué ou non substitué, d'halogène et d'un groupe alcoxy,
L₁ représente un groupe de liaison divalent comprenant un maximum de 20 atomes de carbone,
A₁ représente un groupe fonctionnel choisi parmi le groupe composé d'un acide carboxylique ou d'un sel de celui-ci, d'un acide sulfonique ou d'un sel de celui-ci, d'un acide phosphonique ou d'un sel de celui-ci, d'un monoester d'acide phosphorique ou d'un sel de celui-ci et d'un monoester d'acide sulfurique ou d'un sel de celui-ci, 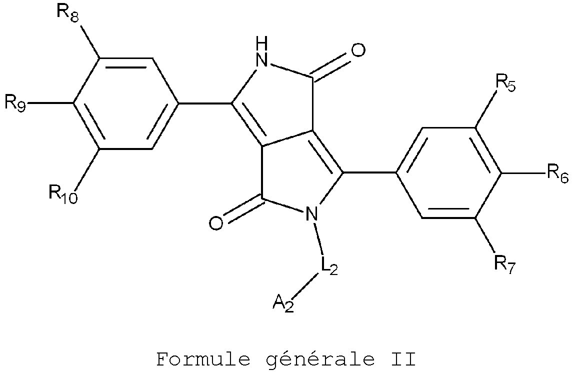 où
R₅, R₆, R₇, R₈, R₉ et R₁₀ sont choisis, l'un indépendamment de l'autre, parmi le groupe composé d'hydrogène, d'un groupe alkyle substitué ou non substitué, d'un groupe aryle substitué ou non substitué, d'halogène, d'un groupe nitrile et d'un groupe alcoxy, L₂ représente un groupe de liaison divalent comprenant un maximum de 20 atomes de carbone,
A₂ représente un groupe fonctionnel choisi parmi le groupe composé d'un acide carboxylique ou d'un sel de celui-ci, d'un acide sulfonique ou d'un sel de celui-ci, d'un acide phosphonique ou d'un sel de celui-ci, d'un monoester d'acide phosphorique ou d'un sel de celui-ci et d'un monoester d'acide sulfurique ou d'un sel de celui-ci.

2. Encre aqueuse pour jet d'encre selon la revendication 1, **caractérisée en ce que** les quinacridones sont choisies parmi le groupe composé de Pigment Red 122, Pigment Violet 19, Pigment Red 202, Pigment Red 209 et de solutions solides de ceux-ci.

3. Encre aqueuse pour jet d'encre selon la revendication 1, **caractérisée en ce que** les dicétopyrrolopyrroles sont choisis parmi le groupe composé de Pigment Red 254, Pigment Red 255, Pigment Red 264, Pigment Red 270, Pigment Red 272, Pigment Orange 73 et Pigment Orange 71.

4. Encre aqueuse pour jet d'encre selon l'une quelconque des revendications précédentes, **caractérisée en ce que** L₁ est choisi parmi le groupe composé d'un groupe alkyle substitué ou non substitué et d'un groupe alcaryle alkyle substitué ou non substitué.

5. Encre aqueuse pour jet d'encre selon la revendication 4, **caractérisée en ce que** L₁ est en outre substitué par un groupe fonctionnel choisi parmi le groupe composé d'un acide carboxylique ou d'un sel de celui-ci, d'un acide sulfonique ou d'un sel de celui-ci, d'un acide phosphonique ou d'un sel de celui-ci, d'un monoester d'acide phosphorique ou d'un sel de celui-ci et d'un monoester d'acide sulfurique ou d'un sel de celui-ci.

6. Encre aqueuse pour jet d'encre selon l'une quelconque des revendications précédentes, **caractérisée en ce que** la particule de résine comprend une capsule comprenant une enveloppe polymère entourant un coeur et contenant de la poly(urée) ou du poly(uréthane).

7. Encre aqueuse pour jet d'encre selon la revendication 6, **caractérisée en ce que** le coeur contient un réactant capable de former un réactif lors d'une exposition à de la chaleur et/ou à de la lumière.

8. Encre aqueuse pour jet d'encre selon la revendication 7, **caractérisée en ce que** le réactant est un composé thermodurcissable.

9. Encre aqueuse pour jet d'encre selon la revendication 8, **caractérisée en ce que** le composé thermodurcissable est un isocyanate bloqué.

10. Encre aqueuse pour jet d'encre selon les revendications 6 à 9, **caractérisée en ce que** l'enveloppe polymère comprend un groupe dispersant lié par covalence choisi parmi le groupe composé d'un acide carboxylique ou d'un sel de celui-ci, d'un acide sulfonique ou d'un sel de celui-ci, d'un ester d'acide phosphorique ou d'un sel de celui-ci, d'un acide phosphonique ou d'un sel de celui-ci et d'un groupe oxyde de polyéthylène.

11. Ensemble d'encres aqueuses pour jet d'encre comprenant une première encre aqueuse pour jet d'encre telle que définie selon l'une quelconque des revendications 1 à 10 et une deuxième encre aqueuse pour jet d'encre contenant un pigment qui diffère du pigment contenu dans la première encre aqueuse pour jet d'encre.

12. Procédé d'enregistrement par jet d'encre comprenant les étapes consistant à mettre à disposition un substrat et à projeter ensuite sur le substrat l'encre aqueuse pour jet d'encre telle que définie dans les revendications 1 à 10.
